Europäisches Patentamt

European Patent Office

Office européen des brevets

(19)

(11) Numéro de publication : **0 094 298**
**B1**

(12) **FASCICULE DE BREVET EUROPÉEN**

(45) Date de publication du fascicule du brevet :
15.06.88

(21) Numéro de dépôt : 83400880.7

(22) Date de dépôt : 03.05.83

(51) Int. Cl.⁴ : **G 01 F 23/00**

(54) Procédé et dispositif de mesure du niveau de liquide dans un réservoir de véhicule.

(30) Priorité : 07.05.82 FR 8207999

(43) Date de publication de la demande :
16.11.83 Bulletin 83/46

(45) Mention de la délivrance du brevet :
15.06.88 Bulletin 88/24

(84) Etats contractants désignés :
DE GB IT NL SE

(56) Documents cités :
DE-A- 2 408 545
DE-A- 2 849 066
FR-A- 1 247 427
FR-A- 1 373 284
US-A- 3 935 592

(73) Titulaire : REGIE NATIONALE DES USINES RENAULT
Boîte postale 103 8-10 avenue Emile Zola
F-92109 Boulogne-Billancourt (FR)

Transports Recherches Etudes Groupement d'Intérêt
Economique (T.R.E.G.I.E.)
145 avenue Paul-Doumer
F-92500 Rueil Malmaison (FR)

(72) Inventeur : Bosquain, Denis
69, avenue de la République
F-92500 Rueil Malmaison (FR)
Inventeur : Hersant, Jacques
85-87, avenue du Général Leclerc
F-78220 Viroflay (FR)

EP 0 094 298 B1

Jouve, 18, rue St-Denis, 75001 Paris, France

## Description

La présente invention se rapporte à un procédé et à un dispositif de mesure du niveau de liquide dans un réservoir de véhicule soumis à des mouvements désordonnés lors du roulement, utilisant une jauge analogique de niveau dont le signal de sortie est filtré puis converti numériquement.

Un exemple connu de tels procédé et dispositif comportant les caractéristiques techniques énoncées dans les préambules des revendications 1 et 3 est décrit dans la demande de brevet allemand N° 2 849 066.

Le volume de liquide dans un réservoir est une grandeur bien déterminée, éventuellement variable dans le temps.

Par contre, le niveau du liquide par l'intermédiaire duquel se fait le plus souvent cette mesure de volume peut être soumis à des fluctuations parasites.

Ce problème de fluctuations parasites du niveau de liquide se pose en particulier pour les jauges à carburant des véhicules automobiles, jauges qui sont toujours perturbées par les vibrations et clapotis dus aux inégalités de la route, par les accélérations et décélérations horizontales et par les inclinaisons résultant du profit de la route.

Les jauges analogiques usuelles, qui sont généralement du type à flotteur et rhéostat, sont incapables de fournir une indication à la fois stable et précise au litre près, qui permettrait un affichage numérique de la valeur de la jauge, ainsi qu'éventuellement un traitement en vue de l'affichage de la consommation.

Pour résoudre ce problème des fluctuations parasites, on a déjà proposé d'améliorer le capteur lui-même. A titre d'exemple, on peut citer l'utilisation de jauges à fil chaud. Une autre suggestion consiste à utiliser un système à ultrasons mesurant le vide d'air dans le réservoir. Par ailleurs, on peut envisager de fixer le réservoir sur la carcasse du véhicule par des coussinets piézoélectriques mesurant directement la masse du liquide dans le réservoir.

Toutes ces solutions se traduisent soit par une multiplication des capteurs, soit par une modification de la disposition mécanique du réservoir.

Un autre type de solution est décrit dans la demande de brevet allemand N° DE-A-2 408 545 et dans la demande de brevet américain N° US-A-3 935 592 par exemple. Ces demandes concernent des procédés et dispositifs pour capter des valeurs instantanées, comportant une jauge analogique, un convertisseur analogique/numérique et des moyens générant une moyenne des valeurs mesurées. De plus, le document DE-A-2 408 545 divulgue un dispositif d'affichage numérique du résultat, tandis que le document, US-A-3 935 592 décrit un enregistreur à bande magnétique pour stocker un nombre déterminé de valeurs de moyennes.

La présente invention a pour objet un procédé et un dispositif de mesure du niveau de liquide dans un réservoir de véhicule éliminant les fluctuations parasites auxquelles est soumis le niveau de liquide dans un réservoir de véhicule pour fournir ainsi une indication à la fois stable et précise permettant un affichage numérique du résultat de la mesure.

Le procédé conforme à l'invention de mesure du niveau de liquide dans un réservoir de véhicule soumis à des mouvements désordonnés lors du roulement consiste à capter à chaque instant le niveau de liquide à l'aide d'une jauge de niveau analogique. Il est caractérisé par le fait que les niveaux instantanés captés sont utilisés pour former une pluralité de valeurs moyennes en fonction de la distance parcourue par le véhicule. Le résultat définitif de la mesure est déterminé à partir de ces valeurs moyennes.

Le procédé conforme à l'invention est basé sur la constatation que les fluctuations parasites auxquelles est soumis le niveau de carburant dans un réservoir de véhicule sont de trois types :

1. Les vibrations et clapotis dus aux inégalités de la route engendrent des fluctuations de fréquence élevée, de faible amplitude, de valeur moyenne nulle. La fréquence de ces fluctuations est comprise entre environ 0,2 et 10 Hz.

2. Les accélérations horizontales liées aux variations de vitesse du véhicule, notamment aux décélérations, sont de forte amplitude et présentent une longueur d'onde proportionnelle à la distance de freinage. La valeur moyenne est également nulle.

3. Les inclinaisons qui dépendent du profil de la route ont une forte amplitude et présentent également une valeur moyenne nulle sur une grande distance.

Les vibrations et clapotis de fréquence élevée sont éliminés par un filtre passe-bas relié à la sortie de la jauge et recevant ainsi le signal de sortie analogique de la jauge.

Les fluctuations dues aux accélérations horizontales et aux inclinaisons sont éliminées par filtrage en fonction de la distance parcourue.

Afin de permettre, après un arrêt du véhicule, la poursuite de la mesure sur la base des valeurs moyennes déterminées avant l'arrêt du véhicule, il est avantageux de sauvegarder à chaque arrêt du véhicule, un nombre déterminé de valeurs moyennes dans une mémoire en vue d'une mesure ultérieure.

Le dispositif conforme à l'invention de mesure du niveau de liquide dans un réservoir de véhicule soumis à des mouvements désordonnés pendant le roulement du véhicule comprend une jauge analogique de niveau. Un filtre passe-bas reçoit le signal de sortie analogique de la jauge. Un convertisseur analogique/numérique transforme le signal filtré de la jauge en signal numérique. Un calculateur reçoit des informations sur la distance parcourue par le véhicule. Le dispositif est caractérisé en ce qu'un moyen est prévu pour générer une première moyenne des mesures sur une première distance franchie par le véhicule. Un moyen est prévu pour générer une deuxième moyenne des valeurs des premières moyennes sur une deuxième distance franchie par le véhicule, supérieure à ladite première distance. Un moyen de mémorisation est prévu pour stocker un nombre déterminé de valeurs des deuxièmes moyennes. Ledit calculateur est également prévu pour tracer une droite moyenne à partir des valeurs des deuxièmes moyennes. Un moyen est prévu pour l'affichage du résultat de la mesure sur ladite droite moyenne.

La distance de freinage d'un véhicule étant rarement supérieure à 200 m, il est avantageux de choisir ladite première distance par exemple égale à 200 m. Ladite deuxième distance servant de base pour l'établissement desdites deuxièmes moyennes est, dans ce cas, avantageusement égale à 2 km. L'établissement de la droite moyenne sur laquelle s'effectue la mesure est avantageusement établi sur les dix dernières valeurs des deuxièmes moyennes, ce qui correspond à une distance de 20 km. Sur une telle distance, la valeur moyenne des inclinaisons dues au profil de la route est nulle.

Le dispositif conforme à l'invention comprend, en outre, de préférence un moyen pour éliminer les valeurs erratiques des premières moyennes en fonction d'un écart type prédéterminé, de préférence jusqu'à un maximum de deux valeurs, le moyen pour générer la deuxième moyenne à partir des valeurs des premières moyennes effectuant, dans ce cas, une deuxième moyenne corrigée sur les huit, neuf ou dix valeurs conservées.

De préférence, le dispositif conforme à l'invention comprend un moyen couplé avec le compteur de distance du véhicule pour agir, en fonction de la distance parcourue, sur les moyens de génération de la première moyenne et de la deuxième moyenne et sur le calculateur établissant la droite moyenne sur laquelle s'effectue la mesure.

En se référant au dessin annexé, on va décrire ci-après plus en détail un exemple de réalisation illustratif et non limitatif de l'objet de l'invention ; sur le dessin :

- la figure 1 est un schéma d'un mode de réalisation d'un dispositif de mesure de niveau suivant l'invention ;

- la figure 2 est un graphique illustrant la détermination de la droite moyenne sur laquelle s'effectue la mesure ;

- la figure 3 est un organigramme montrant les différentes phases du procédé suivant l'invention.

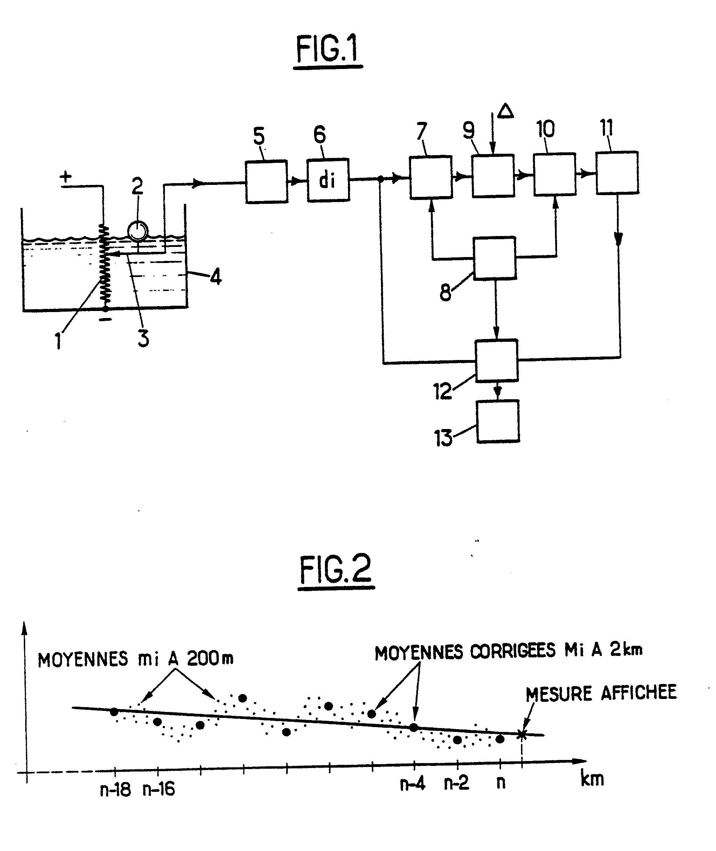

Le dispositif de mesure de niveau illustré par la figure 1 comprend de façon connue une jauge de carburant composée d'un rhéostat 1 et d'un flotteur 2 portant un curseur 3, pour mesurer le niveau de carburant dans le réservoir 4 d'un véhicule automobile. Le curseur 3 est relié directement à un filtre passe-bas 5 qui élimine, du signal analogique fourni par la jauge, les oscillations de fréquence élevée (0,2 à 10 Hz) correspondant aux vibrations et clapotis dus aux inégalités de la route. Le filtre 5 est suivi d'un convertisseur analogique/numérique 6.

La sortie du convertisseur 6 est reliée à un générateur de moyenne 7 commandé par les impulsions de déclenchement d'un générateur d'impulsions 8 couplé au compteur de distance du véhicule. Sous la commande des impulsions du générateur d'impulsions 8, le générateur de moyenne 7 établit une moyenne $m_i$ des mesures de niveau $d_i$ sur une distance parcourue déterminée par le générateur d'impulsions 8. Cette distance supérieure à la distance de freinage maximale du véhicule est choisie par exemple à 200 m.

La sortie du générateur de moyenne 7 est reliée à une unité 9 à laquelle est appliqué un écart type $\Delta$ prédéterminé. l'unité 9 élimine, parmi un certain nombre des moyennes $m_i$, par exemple les dix dernières moyennes $m_i$ correspondant aux derniers 2 km parcourus, les valeurs par exemple au nombre de deux au maximum, sortant de l'écart type $\Delta$, ces valeurs éliminées correspondant à des valeurs erratiques.

La sortie de l'unité 9 est reliée à un second générateur de moyenne 10 également commandé par le générateur d'impulsions 8 pour établir une moyenne corrigée $M_i$ des valeurs non éliminées comme erratiques parmi les moyennes $m_i$, à savoir les moyennes des 8, 9 ou 10 valeurs parmi les dix dernières moyennes. Chaque moyenne $M_i$ formée par le générateur de moyenne 10 est donc établie sur une distance de 2 km dans la mesure où chaque moyenne $m_i$ est générée sur une distance de 200 m.

Une mémoire 11 non volatile stocke en permanence les dix dernières moyennes $M_i$.

Un calculateur 12 recevant, outre les moyennes $M_i$, également les impulsions du générateur d'impulsions 8 couplé avec le compteur de distance du véhicule détermine, de préférence par la méthode des moindres carrés, une droite moyenne glissante sur les dix dernières moyennes $M_i$ stockée dans la mémoire 11, c'est-à-dire sur les vingt derniers kilomètres parcourus par le véhicule. Cette droite moyenne est remise à jour tous les deux kilomètres.

C'est sur cette droite moyenne dont l'établissement est illustré par la figure 2 qu'a lieu la mesure de niveau de carburant, le résultat de la mesure étant affiché sur un dispositif d'affichage 13.

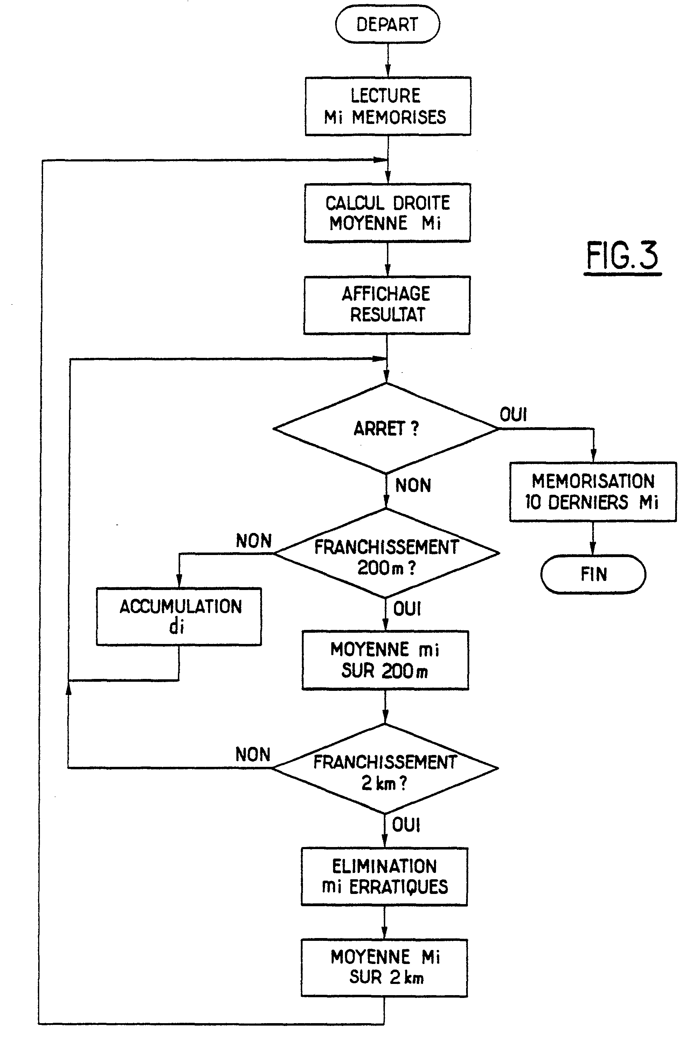

L'organigramme de la figure 3 met en évidence la succession des phases du procédé conforme à l'invention de mesure de niveau de carburant dans le réservoir d'un véhicule automobile.

Le point de départ du procédé consiste dans la lecture des dix dernières moyennes $M_i$, qui sont stockées en permanence dans la mémoire non volatile et y sont conservées également en cas d'arrêt du véhicule. La lecture des dix dernières moyennes $M_i$ permet de calculer la droite moyenne des $M_i$, de procéder à la mesure sur cette droite moyenne et d'afficher le résultat mesuré.

En cas d'arrêt consécutif du véhicule, les dix dernières moyennes $M_i$ sont conservées en mémoire.

Si par contre le véhicule continue de fonctionner, on procède à un cycle de remise à jour de la droite moyenne. Tant que le véhicule n'a pas franchi une distance de 200 m, les valeurs numériques $d_i$ obtenue en permanence par conversion des valeurs analogiques de la jauge de niveau sont accumulées. Dès le franchissement de la distance de 200 m, on procède à la détermination de la moyenne $m_i$ des valeurs $d_i$ sur les derniers 200 m. Les moyennes $m_i$ sont accumulées jusqu'au franchissement d'une distance de 2 km. Sur les dix moyennes $m_i$ ainsi accumulées jusqu'au franchissement des deux kilomètres, on élimine jusqu'à un maximum de deux moyennes $m_i$ erratiques, sortant d'un écart type fixé à l'avance. Sur les 8, 9, ou 10 moyennes $m_i$ restantes, on détermine la moyenne corrigée $M_i$ sur deux kilomètres.

Les moyennes $M_i$ sont stockées en mémoire sur les vingt derniers kilomètres parcourus et c'est à l'aide de ces moyennes $M_i$ stockées en mémoire qu'on détermine une droite moyenne glissante, remise à jour tous les deux kilomètres, droite sur laquelle s'effectue la mesure dont le résultat est affiché.

Un avantage essentiel du dispositif conforme à l'invention consiste dans le fait qu'il permet de conserver le réservoir de carburant avec sa jauge de niveau analogique, donc d'équiper des véhicules moyennant des modifications mineures. En effet, le dispositif conforme à l'invention est branché directement sur le curseur du rhéostat de la jauge et le seul élément supplémentaire en liaison fonctionnelle avec le véhicule consiste dans le générateur d'impulsions 8 qui peut être inséré par exemple dans le flexible du compteur de vitesse/de distance pour fournir les impulsions de commande fonction de la distance parcourue.

L'affichage numérique peut porter non seulement sur le volume restant de carburant dans le réservoir, mais également moyennant un traitement en fonction de la distance parcourue, sur la consommation, grâce à la précision et à la stabilité de l'indication fournie par le dispositif conforme à l'invention.

Enfin, le dispositif conforme à l'invention peut également servir de compteur de facturation pour des véhicules de location. En effet, contrairement aux débitmètres, le dispositif conforme à l'invention donne directement la différence entre le plein et le volume de carburant restant dans le réservoir. Dans cette application, il peut être intéressant de réaliser la mémoire non volatile 11 sous la forme d'un module amovible qui peut ainsi être lue au comptoir du loueur, en vue de la facturation.

Bien entendu, sur des véhicules déjà équipés d'un calculateur de bord, il est possible d'utiliser ce calculateur existant pour la mise en œuvre de l'invention, moyennant une programmation appropriée de ce calculateur.

Il convient de noter qu'un étalonnage préalable de la jauge est nécessaire, aussi bien au remplissage qu'au vidage car les jauges à flotteurs présentent une certaine hystérésis. A cet effet, pour un type de jauge et de réservoir donné, on remplit puis on vide ce dernier par fractions constantes, par exemple litre par litre, et on note à chaque fois la valeur fournie par la jauge. Ceci permet d'établir et de programmer en mémoire du calculateur une table de correspondance entre la valeur fournie par la jauge et le volume en litre de carburant restant dans le réservoir.

Enfin, bien que l'invention ait été décrite ci-dessus avec utilisation d'une jauge de niveau à flotteur et rhéostat, il va de soi qu'elle peut être mise en œuvre avec tout autre type de jauge sensible aux fluctuations parasites du niveau de carburant dans un réservoir.

**Revendications**

1. Procédé de mesure du niveau de liquide dans un réservoir de véhicule soumis à des mouvements désordonnés pendant le roulement, procédé suivant lequel on capte à chaque instant le niveau de liquide d'une jauge analogique de niveau, caractérisé par le fait que les niveaux instantanés captés par la jauge sont utilisés pour former une pluralité de valeurs moyennes en fonction de la distance parcourue par le véhicule et que le résultat définitif de la mesure du niveau de liquide est déterminé à partir desdites valeurs moyennes.

2. Procédé suivant la revendication 1, caractérisé par le fait qu'à chaque arrêt du véhicule, un nombre déterminé de valeurs moyennes est sauvegardé dans une mémoire non volatile en vue d'une mesure ultérieure.

3. Dispositif de mesure du niveau de liquide dans un réservoir de véhicule soumis à des mouvements désordonnés pendant le roulement, comprenant une jauge analogique de niveau (1, 2, 3), un filtre passe-bas (5) recevant le signal de sortie analogique de la jauge (1, 2, 3), un convertisseur analogique/numérique (6) transformant le signal analogique filtré de la jauge en signal numérique ($d_i$), des moyens arithmétiques recevant des informations sur la distance parcourue par le véhicule caractérisé en ce qu'il comprend de plus un moyen (7) pour générer une première moyenne ($m_i$) des valeurs ($d_i$) mesurées, sur une première distance franchie par le véhicule, un moyen (10) pour générer une deuxième moyenne ($M_i$) des valeurs des premières moyennes, sur une deuxième distance franchie par le véhicule, supérieure à ladite première distance, un moyen de mémorisation (11) pour stocker un nombre déterminé de valeurs desdites deuxièmes moyennes, un calculateur (12) comportant lesdits moyens arithmétiques et capable de tracer une droite moyenne à partir des valeurs desdites deuxièmes moyennes ($M_i$), et un dispositif (13) d'affichage numérique du résultat de la mesure obtenue sur la droite moyenne.

4. Dispositif suivant la revendication 3, caractérisé par le fait qu'il comprend, en outre, un moyen (9) pour éliminer les valeurs erratiques desdites premières moyennes ($m_i$) en fonction d'un écart type prédéterminé (Δ), ledit moyen (10) générant une deuxième moyenne corrigée sur la base des valeurs des premières moyennes conservées après élimination des valeurs erratiques.

5. Dispositif suivant la revendication 3 ou 4, caractérisé par le fait que ladite première distance est égale à environ 200 m, que ladite seconde distance est égale à environ 2 km et que ledit moyen de mémorisation (11) conserve en mémoire les valeurs des dix deuxièmes moyennes et que ledit calculateur (12) établit ladite droite moyenne sur lesdites dix deuxièmes moyennes.

6. Dispositif suivant l'une quelconque des revendications 3 à 5, caractérisé par le fait qu'il comprend un générateur d'impulsions (8) couplé avec le compteur de distance du véhicule et relié auxdits moyens (7, 10) de génération de moyenne et audit calculateur (12).

**Claims**

1. A process for measuring the level of liquid in a vehicle tank which is subject to random movements while moving, the process comprising detecting at each moment the level of liquid of an analog level gauge, characterised in that the instantaneous levels detected by the gauge are used to form a plurality of average values in dependence on the distance covered by the vehicle and that the definitive result of the measurement of the level of liquid is determined on the basis of said average values.

2. A process according to claim 1 characterised in that, each time that the vehicle stops, a given number of average values is retained in a nonvolatile memory for a subsequent measurement operation.

3. Apparatus for measuring the level of liquid in a vehicle tank which is subject to random movements while travelling comprising an analog level gauge (1, 2, 3), a low pass filter (5) for receiving the analog output signal from the gauge (1, 2, 3), an analog-digital converter (6) for converting the filtered analog signal from the gauge into a digital signal ($d_i$), and arithmetic means for receiving data relating to the distance covered by the vehicle, characterised in that it also comprises a means (7) for generating a first average ($m_i$) of the measured values ($d_i$) over a first distance covered by the vehicle, a means (10) for generating a second average ($M_i$) of the values of the first averages over a second distance covered by the vehicle which is greater than said first distance, a storage means (11) for storing a given number of values of said second averages, a computing means (12) comprising said arithmetic means and being capable of plotting a mean straight line on the basis of the values of said second averages ($M_i$) and a device (13) for digital display of the result of the measurement obtained on the mean straight line.

4. Apparatus according to claim 3 characterised in that it further comprises a means (9) for eliminating the erratic values of said first averages

($m_i$) in dependence on a predetermined typical difference (Δ), said means (10) generating a second average which is corrected on the basis of the values of the first averages which are retained after elimination of the erratic values.

5. Apparatus according to claim 3 or claim 4 characterised in that said first distance is equal to about 200 m, that said second distance is equal to about 2 km and that said storage means (11) stores the values of ten second averages and that said computing means (12) establishes said mean straight line on said ten second averages.

6. Apparatus according to any one of claims 3 to 5 characterised in that it comprises a pulse generator (8) coupled to the odometer of the vehicle and connected to said average generating means (7, 10) and said computing means (12).

**Patentansprüche**

1. Verfahren zur Messung des Flüssigkeits-Niveaus in einem Fahrzeugtank, der unregelmäßige Bewegungen während der Fahrt ausführt, wobei das Flüssigkeits-Niveau zu jeder Zeit mittels eines analogen Niveau-Meßgerätes festgestellt wird, dadurch gekennzeichnet, daß die vom Meßgerät erfaßten Augenblickswerte verwendet werden, um eine Vielzahl von Mittelwerten als Funktion des vom Fahrzeug zurückgelegten Weges zu bilden und daß das endgültige Resultat der Flüssigkeits-Niveau-Messung ausgehend von diesen Mittelwerten bestimmt wird.

2. Verfahren nach Anspruch 1, dadurch gekennzeichnet, daß bei jedem Halt des Fahrzeugs eine vorgegebene Anzahl von Mittelwerten in einem Dauerspeicher festgehalten wird im Hinblick auf eine spätere Messung.

3. Vorrichtung zur Messung des Flüssigkeits-Niveaus in einem Fahrzeugtank, der unregelmäßige Bewegungen während der Fahrt ausführt, mit einem analogen Niveau-Meßgerät (1, 2, 3), einem Tiefpaßfilter (5), dem das analoge Ausgangssignal des Meßgerätes (1, 2, 3) zugeführt wird mit einem analog-numerischen Wandler (6), der das gefilterte Analogsignal des Meßgerätes in ein numerisches Signal ($d_i$) umwandelt, wobei eine Rechenanordnung Informationen über die vom Fahrzeug zurückgelegte Strecke erhält, dadurch gekennzeichnet, daß sie außerdem eine Anordnung (7) aufweist, um einen ersten Mittelwert ($m_i$) der gemessenen Werte ($d_i$) zu erzeugen über eine erste vom Fahrzeug durchlaufene Strecke, eine Anordnung (10), um einen zweiten Mittelwert ($M_i$) aus den Werten der ersten Mittelwerte zu erzeugen, entlang einer zweiten vom Fahrzeug durchlaufenen Strecke, die größer als die erste Strecke ist, eine Speicheranordnung (11) zum Speichern einer vorbestimmten Anzahl von Werten der zweiten Mittelwerte, einen Rechner (12), der die genannte Rechenanordnung enthält und in der Lage ist, eine mittlere Gerade zu zeichnen ausgehend von den Werten der zweiten Mittelwerte (Mi) sowie eine numerische Anzeigeanordnung (13) für das Resultat der entlang der mittleren Geraden erhaltenen Messung.

4. Vorrichtung nach Anspruch 3, dadurch gekennzeichnet, daß sie außerdem eine Anordnung (9) aufweist, um falsche Werte der ersten Mittelwerte ($m_i$) auszusondern als Funktion einer vorgegebenen typischen Abweichung ($\Delta$), wobei die Anordnung (10) einen zweiten korrigierten Mittelwert auf Basis der Werte der ersten behaltenen Mittelwerte nach der Aussonderung der falschen Werte erzeugt.

5. Vorrichtung nach Anspruch 3 oder 4, dadurch gekennzeichnet, daß die erste Strecke ungefähr gleich 200 Meter beträgt, daß die zweite Strecke ungefähr gleich 2 Kilometer beträgt und daß die Speicheranordnung (11) die Werte der zehn zweiten Mittelwerte speichert und daß der Rechner (12) die mittlere Gerade aus diesen zehn zweiten Mittelwerten bildet.

6. Vorrichtung nach einem der Ansprüche 3 bis 5, dadurch gekennzeichnet, daß sie einen Impulsgenerator (8) aufweist, der mit dem Entfernungszähler des Fahrzeugs gekoppelt ist und mit den Anordnungen (7, 10) zur Erzeugung der Mittelwerte sowie mit dem Rechner (12) verbunden ist.

## FIG.1

## FIG.2

MOYENNES mi A 200m

MOYENNES CORRIGEES Mi A 2km

MESURE AFFICHEE

n-18 n-16    n-4 n-2 n    km

FIG.3